# EUROPEAN PATENT APPLICATION

(11) **EP 4 567 773 A1**
(43) Date of publication of application: **11.06.2025**
(21) Application number: 23215152.2
(22) Date of filing: 08.12.2023
(51) Int. Cl.: G09B 23/28

(54) **USER INTERACTIVE SYSTEM**

(71) Applicant: Koninklijke Philips N.V., 5656 AG Eindhoven (NL)
(72) Inventor: KUHLMANN, Daan, Eindhoven (NL); GEURTS, Lucas Jacobus Franciscus, Eindhoven (NL); VAN EE, Raymond, 5656AG Eindhoven (NL); BULUT, Murtaza, Eindhoven (NL); SPELT, Hanne Adriana Alijda, Eindhoven (NL)
(74) Representative: Philips Intellectual Property & Standards

(57) **Abstract**

An interactive device comprising a moveable article having wirelessly detectable tags carried thereby and a housing having a tag detection mechanism carried thereby. Depending upon tag data detected at the tag detection mechanism, an AV output generated by the system is varied. For example, an AV output may be varied in dependence upon a pose position and/or movement state of the article relative to the housing, this being inferable from the tag detection data.

## Description

### FIELD OF THE INVENTION

The present invention relates to an interactive system, for instance an educational interactive system, for example for application within the health domain for patient health communication or education.

### BACKGROUND OF THE INVENTION

Communicating information to a user, for example regarding an upcoming medical procedure, is usually performed via a static information source such as a leaflet, or a standard video presentation. However, for many patients, such an information source is insufficient, due to lack of understanding or lack of engagement. For example, for children, a different form of interaction between the information source and the child may be preferable.

The applicant has previously devised a device which permits a user to familiarize themselves with a scan procedure in an interactive way. The device takes the shape of a scanner, e.g. a CT scanner or MRI scanner, and includes a doll and a moveable table by which the doll can be moved in or out of the scanner. An audio and/or video output can be generated responsive to the doll being inserted in the scanner. This helps to tell the story of the scan to a vulnerable user, e.g. a child, in a more interactive way.

### SUMMARY OF THE INVENTION

It is the recognition of the inventors that the general concept of an interactive device which presents audio and/or video outputs responsive to particular physical interaction states between the user and the device could be expanded to enable a more enriched interaction experience and to enable communication of a wider range of information outputs to the user.

The invention is defined by the claims.

According to examples in accordance with an aspect of the invention, there is provided an interactive system, comprising: a moveable article and a housing structure. The housing structure may be shaped so as to define a bore. The system may further include a platform slidable in and out of the bore. The moveable article may be positionable on the platform. The moveable article may be receivable at least partially inside the bore, for example by movement of the platform into the bore. The system may further comprise a plurality of wirelessly detectable tags. Each tag may be encoded with a unique identifier. At least a subset of two or more of the plurality of wirelessly detectable tags may be carried by the moveable article at pre-defined locations of the article. A tag sensor apparatus may be comprised by the housing, operable to sense each of the plurality of wirelessly detectable tags when within a detectable range. This may include reading the unique identifier of each sensed tag. The system may further comprise a user interface comprising a user output means, for example a sensory output apparatus, for example an audio and/or visual (AV) output apparatus. The system may further comprise a controller. The controller may be adapted to: receive tag detection data from the tag sensor apparatus; and control an output of the user output means, e.g. a sensory output device in dependence upon the received tag detection data. For example, the controller may be adapted to control an AV output of the AV output apparatus in dependence upon the received tag detection data.

The proposed interactive system provides, in general terms, a user output device, such as a audio and/or visual (AV) output device, with a modified mechanism for user-machine interaction, namely one which is tactile in nature. In other words, the system may be understood as a user interface device having a mode of user-machine communication which is physical or tactile. Furthermore, by including a plurality of machine-readable tags on the moveable article, this enables adaptation of the user output which is presented in dependence upon the particular combination, sequence (order), and/or spatial arrangement of tags which are detected. This allows for a more enriched interaction experience, wherein, for example, different position or motion states of the moveable article relative to the housing may trigger different responses.

The system in particular is envisaged for advantageous application for an educational purpose, wherein the user outputs of the device, e.g. audio and/or visual (AV) presentations, have educational content and wherein the selection of presentation to output to a user is determined so as to relate to the particular tag data which is detected, e.g. based on the position or motion of the article relative to the housing.

Thus, for example, the interactive system may be an educational system, for example a medical educational system, for example for use by a patient or other non-clinician user.

Correct education and preparation of a patient prior to a medical procedure such as a medical imaging scan can result in faster and more efficient execution of the procedure. For example, it may result in a medical imaging scan being performed in a faster manner because of improved user cooperation. This may also reduce a need to repeat scans. It may also improve a quality of acquired images, for example due to improved user awareness, reduced stress, and increased cooperation.

In some embodiments, the housing structure may resemble the form of a medical imaging scanner.

The platform may resemble the form of a patient table of such a scanner.

The moveable article may resemble the form of a human body or a body of an anthropomorphic figure. This may be referred to generally in this disclosure as a 'doll'.

The system may be for educating a user regarding a type of medical imaging examination, such as an MRI or CT scan.

In this context, the AV output can be controlled to present the user, e.g. a child, with information dependent upon how they position the doll relative to the mock scanner. For example, if a user pushes the doll feet first into the scanner, an AV output may inform the user that this is the wrong orientation. If the user places the doll on its side on the platform, an AV presentation may inform the user that the doll should be face-up.

The standard way to control presentation of such information outputs would be through a simple keypad or pointer control, e.g. a touchscreen. It is proposed according to embodiments of the present invention to provide an alternative means of user-machine communication, whereby user inputs to the machine take the form of movement or placement of an article relative to a housing of the machine.

In some embodiments, the controller may be configured to determine an indication of a pose position and/or motion of the article relative to the housing structure based on the received tag detection data and based on the known pre-defined locations of the wirelessly detectable tags relative to the article. The controller may be further configured to control an AV output of the AV output apparatus in dependence upon the detected pose and/or motion.

In particular, as will be recognized from the above description, it is proposed in this set of embodiments to vary the AV output of the device in dependence upon a position or motion state of an article relative to a fixed reference housing of the system. This provides a unique way for controlling the AV output. In particular, dependent upon how the user moves or positions the article relative to the housing, different AV outputs are presented to the user. Such a mode of machine interaction is more understandable and intuitive to a user than a more standard type of interfacing such as a keypad or touchscreen. This mode of interaction has particular utility for example in communicating relevant information to a child or other vulnerable user.

The pose position may mean a pose relative to the platform. It may refer to an orientation of the article relative to the platform or the housing.

The controller may record or monitor tag detection data over a certain window. For example, a start of a usage session may be triggered, e.g. via the user interface or upon detection of one or more of the tags following a pre-defined period of non-detection.

In some embodiments, the controller may be communicable with a media supply sub-system. The media supply sub-system may be operable to output/provide an audio and/or visual (AV) presentation for output by the user interface responsive to a request message (e.g. from the controller).

For example, in some embodiments, the controller may be communicable with a media datastore, wherein the media datastore stores a plurality of audio and/or visual (AV) presentations for output by the user interface. For example, there may be provided a media supply subsystem and wherein the media supply subsystem comprises the media datastore.

In some embodiments, the controlling the AV output in dependence upon the received tag detection data comprises: generating a request message based on the received tag detection data, transmitting the request message to the media supply subsystem, receiving an audio and/or visual (AV) presentation from the media supply subsystem responsive to the request message and controlling the user interface to output the identified AV presentation.

In some embodiments, the request message may comprise an indication of a detected pose and/or motion of the moveable article. Thus, the received AV presentation may be determined by the media supply subsystem in dependence upon the detected pose and/or motion of the moveable article.

In some embodiments, the controlling the AV output in dependence upon the received tag detection data comprises: accessing an AV response database which lists an indication of at least one of the AV presentations in the datastore to present to a user in response to each of a set of different tag detection datasets; querying the AV response database with the detected tag detection dataset to identify an AV presentation to display to a user; and controlling the user interface to output the identified AV presentation.

The AV response database and the media datastore may be comprised by a media supply subsystem for example.

In some embodiments, the AV output is controlled in dependence upon a detected pose and/or motion state of the moveable article. This may comprise: accessing an AV response database which lists an indication of at least one of the AV presentations in the datastore to present to a user in response to each of a set of different possible pose and/or motion states of the article; querying the AV response database with the detected pose and/or motion state to identify an AV presentation to display to a user; and controlling the user interface to output the identified AV presentation.

Additionally or alternatively, the aforementioned media supply subsystem may include a generative AI module for partly or wholly generating an AV presentation for output responsive to a request message, for example responsive to a request message indicative of a tag detection dataset or indicative of a detected pose and/or motion state of the moveable article.

For example, after querying and identifying the AV presentation, in some cases another layer of processing can be performed, e.g. using a generative AI module, to modify the retrieved AV presentation for the media datastore and generate new content.

The system may comprise the media datastore in some embodiments, or the datastore may be remote to the system, e.g. a cloud datastore.

In some embodiments, each of the wirelessly detectable tags are RFID tags and wherein the tag sensor apparatus is an RFID tag sensor apparatus.

Alternatively a more sophisticated position sensing means could be used wherein an xyz co-ordinate position of each tag can be detected directly by the sensor apparatus. Use of RFID tags greatly simplifies the operation and hardware requirements for the device.

In some embodiments, the tag sensing apparatus comprises one or more tag sensor devices. Each tag sensor device may have a spatial sensing range within which a wirelessly detectable tag is detectable by the tag sensor device, and outside of which a wirelessly detectable tag is not detectable by the tag sensor device.

In some embodiments, responsive to entry of any wirelessly detectable tag into its respective spatial sensing range, each of the one or more tag sensor devices may be adapted to generate an output indicative of the unique identifier of the detected tag.

In some embodiments, the controller may be adapted to receive the outputs of the one or more tag sensor devices and determine an indication of pose and/or motion of the article relative to the housing structure based on identities of the tags which are detected at each of the one or more tag sensor devices and a sequence order in which the tags are detected.

This may for example comprise identifying which tags are detected by which sensor device(s), and which tags are not detected by which sensor devices. It further comprises detecting the order in which the tags which are detected to come into the spatial range of each sensor device.

By detecting which tags are detected by each sensing device and which are not, an axial rotation of the article might be determinable, for example if different sensors have different angular ranges of sensitivity. This will be discussed further later.

By determining the sequencing of tag detection, a rotation position of the article can for example be detected, for example a rotation position about an axis normal to the platform. For example, in the case of a doll, if the article is oriented feet-first, the tags located near the feet of the doll would be detected first, followed by those on the body, followed by those on the head. If the doll were oriented head-first, the sequence order would be the opposite.

By preferably further keeping timestamps of each tag detection, a picture can also be built up of the speed of motion of the article.

In some embodiments, the controller may be adapted to compile a running record of tag identifiers which are detected by each of the one or more tag sensor devices, a sequence order in which the identifiers are detected, and a timestamp at which each is detected.

If there is more than one tag sensor device comprised by the tag sensor apparatus, then a respective running record may be kept for each sensor device.

In some embodiments, the controller may be adapted to compile a running log of AV presentations which have been output by the system since a start of an operation session. This may allow the controller to keep track of information which the user has already been presented. This additional information in the running log may additionally be used in the controlling the AV output of the AV output apparatus in dependence upon the received tag detection data. For example, AV presentations which have already been output to the user interface may not be output again in a same operation session.

In some embodiments, the controller may be configured to detect a speed of movement of the article relative to the housing structure based on the tag detection data.

For example, based on time stamps of detected tags, speed may be inferred.

In some embodiments, the method may further comprise one or more secondary articles, each secondary article being removably mountable to the moveable article. Each of the one or more secondary articles may carry a pre-defined one or more of the plurality of wirelessly detectable tags.

In some embodiments, the controller may be adapted to control the AV output of the AV output apparatus further based on which, if any, of the wirelessly detectable tags carried by the one or more secondary articles are detected (e.g. which have been detected in a current usage session.)

In other words, the controller may modify the control of the AV output responsive to, and in dependence upon, presence of a secondary article within the sensing field of the sensing apparatus.

In some embodiments, the controller may be adapted to obtain an indicator of a category of planned diagnostic study for the user. The controller may be adapted to control the AV output of the AV output apparatus further in dependence upon the category of planned diagnostic study.

For example, there may be stored a different respective AV response database for each of a plurality of different categories of diagnostic study. The controller may be adapted to identify the AV response database associated with the planned diagnostic study for the user and use the identified AV response database for the lookup of AV responses.

In some embodiments, the controller is communicable with a patient database which records information indicative of a category of planned diagnostic study for the user, and wherein the controller is adapted to obtain the indicator of a category of planned diagnostic study for the user by querying of the patient database.

In some embodiments, the controller may be adapted to obtain the indicator of a category of planned diagnostic study by means of detection of one of a pre-determined set of wirelessly detectable tags. The controller may be adapted to associate each of the pre-determined set of wirelessly detectable tags with a different one of the plurality of categories of diagnostic study.

Here, for example, a tag associated with the relevant study may be brought into the sensitive field of the sensing apparatus, to communicate the relevant study to the controller. For example, a user might carry a card which comprises a tag having the appropriate identifier encoded thereon. Alternatively, tags attached to different of the secondary articles may be associated with different categories of diagnostic study.

In some embodiments, the controller may be adapted to infer the indicator of a category of planned diagnostic study based on the tag detection data, i.e. based on identifying which tags are detected and using a pre-determined mapping between tag identifications and a diagnostic study. For example, the patient might be given different types of moveable article and/or secondary articles depending upon the scan that is planned for them.

In some embodiments, each tag carried by the article may have an orientation relative to the article. The tag sensing apparatus may comprise one or more tag sensor devices. Each of the wirelessly detectable tags may be detectable to any given one of the one or more tag sensing devices only when oriented within a defined limited range of orientations relative to the given tag sensing device. The set of wirelessly detectable tags carried by the article may include tags mounted at different respective orientations relative to the article.

In other words, each of the one or more tag sensor devices may have an angular sensing range, and wherein only tags oriented within the angular sensing range are detectable by the tag sensing device.

By determining which tags are detected by which of the one or more sensor devices, information relating to orientation of the article can be inferred.

In some embodiments, the tag sensing apparatus may comprise a plurality of the tag sensing devices, these being arranged relative to the housing such that the angular sensing ranges of different of the sensing devices vary. This way, more information about orientation can be inferred.

In some embodiments, each tag may comprise circuitry which extends across a planar substrate, and wherein the orientation of the tag is defined by an orientation of the planar substrate, for example a direction of a normal axis of the planar substrate.

In some embodiments, the controller is adapted to determine an indication of a pose position of the article relative to the housing structure based on the received tag detection data and based on the known pre-defined locations of the wirelessly detectable tags relative to the article. In some embodiments, the determining the indication of the pose position of the article comprises compiling a record of which of the at least subset of wirelessly detectable tags carried by the article are detected by each of the one or more tag sensor devices, and, based on knowledge of the orientation of each of the tags relative to the article, and of the range of tag orientations to which each tag sensor device is sensitive, inferring an indication of a rotation position of the article relative to the one or more tag sensor devices.

In some embodiments, at least two of the wirelessly detectable tags carried by the article are oriented perpendicular to one another.

For example, as mentioned above, each tag may comprise circuitry which extends across a planar substrate, and wherein the orientation of the tag is defined by an orientation of the planar substrate.

For example, the circuitry may comprise a sensing coil or antenna which extends across the plane.

In some embodiments, the controller may be adapted to determine an indication of a pose position of the article relative to the housing structure based on the received tag detection data and based on the known pre-defined locations of the wirelessly detectable tags relative to the article. In some embodiments, the pre-defined set of at least three of the wirelessly detectable tags carried by the article are arranged at substantially the same orientation relative to the article, and are aligned in a row along a linear axis having a defined extension direction relative to the article. The determining the indication of pose position of the article may be further based on detecting a sequence order in which the tags are detected by the tag sensing apparatus, and based on knowledge of the defined extension direction of the linear axis.

For example, if each tag has a circuit mounted to a planar substrate, the normal axes of the planar substrates of all three tags may be substantially aligned.

The controller may further detect the timing between the detection of the tags. This may allow for detecting the speed of receipt of the article within the bore (e.g. speed of pushing the doll into the bore by sliding of the table), if the spacing between the aligned tags is known. The spacing between neighboring tags along the row may be uniform.

In some embodiments, the tag sensor apparatus comprises a plurality of tag sensor devices, each independently operable to sense each of the plurality of wirelessly detectable tags.

In some embodiments, the plurality of tag sensor devices are arranged at different positions around the bore of the housing structure.

In some embodiments, the moveable article is shaped to mimic the form of a human body, comprising a head, arms, legs and torso, e.g. a doll, or figurine.

In some embodiments, each of the previously mentioned secondary articles may be shaped and structured to mimic the form of a garment or personal accessory, e.g. clothing, eye-wear, headwear.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 schematically illustrates an example interactive system according to one or more embodiments of the invention;
Fig. 2 is a block diagram of an example processing device and system in accordance with one or more embodiments of the invention;
Fig. 3 and Fig. 4 schematically illustrate an example mechanism for sensing a pose position and/or motion of a moveable article in accordance with one or more embodiments of the invention; and
Fig. 5 illustrates an example system according to one or more embodiments of the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides an interactive device comprising a moveable article having wirelessly detectable tags carried thereby and a housing having a tag detection mechanism carried thereby. Depending upon tag data detected at the tag detection mechanism, a user output, e.g. a sensory output, e.g. an audio and/or visual AV output generated by the system is varied. For example, a user output may be varied in dependence upon a pose position and/or movement state of the article relative to the housing, this being inferable from the tag detection data. Additionally or alternatively, it may be varied in dependence upon a particular combination of tags which are detected or any other information derivable from tag detection data. Embodiments of the invention have advantageous application as an education aid for children or other vulnerable users. For example, the moveable article may be shaped to take the form of a doll or figurine. The housing may be shaped to take the form of a medical imaging scanner.

In some embodiments, at least a subset of the user outputs may provide information related to a medical imaging procedure.

It is known that by building a more interactive way of presenting information to a child, the information is more accessible.

Provided is a tactile interaction device permitting a wide variety of tactile interactions with the device via different position and/or motion configurations of the moveable article relative to the housing. Hence, there is provided a system allowing a greater number of ways to trigger the playback of different AV outputs. The AV outputs may tell a story relating to the medical imaging procedure.

In general terms, embodiments of the invention may provide a system with wirelessly detectable elements, detectable by a sensor arrangement. The sensor arrangement may comprise multiple sensors, although this is not essential. If multiple sensors are provided, each may be independently operable to detect each of the elements when within a certain sensing range, the sensing range defined by a distance from the sensor and optionally an angular range of orientations of the element relative to the sensor. The moveable article carries multiple of the wirelessly detectable tags at known positions on the article.

In at least some embodiments, each sensor may generate an output indicative of the element unique ID as soon as the element enters its sensitive range, along with a timestamp.

In at least some embodiments, it is proposed to translate the collection of time-series sensing data from the collection of multiple sensors into an estimation of orientation and/or motion of the article.

The tags may be RFID tags. The moveable article may be a doll or other figurine.

By way of brief summary, in accordance with one or more embodiments, the system may include one or more of the following advantageous features.

The wirelessly detectable tags have a certain range from within which a tag detector can detect and read the tag. In some embodiments it is proposed to use tag sensing data to determine a pose position of the moveable article.

By way of example, an XYZ-orientation of the article can be derived. Multiple tags could be at different places inside on the article. For example, if the article takes the form of a doll or figurine, it could be determined e.g. if the doll is placed feet first or head-first on the table, as the tags would be read sequentially as the user pushes the doll into the dummy scanner represented by the housing, i.e. simulating a scan. This could trigger an audio and/or visual (AV) output which communicates a story relating to which is the right position for the doll relative to the scanner.

As will be explained in greater detail later, a subset of tags could be placed perpendicular to each other, making it possible to detect if the doll is lying on the side.

Multiple tags may be read in a same session, and based on which tags are detected, different responses generated. For example, as will be explained further later, in some embodiments, a moveable article may be provided in the form of a doll and a set of one or more secondary articles provided in the form of toy clothing or accessories for the doll, the secondary articles also carrying readable tags. The system can generate an AV output warning the user that a certain piece of clothing or accessory, e.g. one containing metal, is not allowed in the scanner.

With regards to the audio and/or visual (AV) output generated by the user interface, these may include animations or other video presentations, colored illuminations, speech audio output, and/or musical audio output.

As will be discussed in greater detail later, the system can be pre-programmed in dependence upon what scan the patient is going to have, or can be linked to an associated software application for scan-specific learning goals and to track progress of the patient in relation to these goals. The system may be connected to an electronic medical record (EMR) system and use patient information from the EMR system to customize the interaction experience. This preprogramming can also facilitate how the RFID tags within the doll should be read, greatly enhancing personalization.

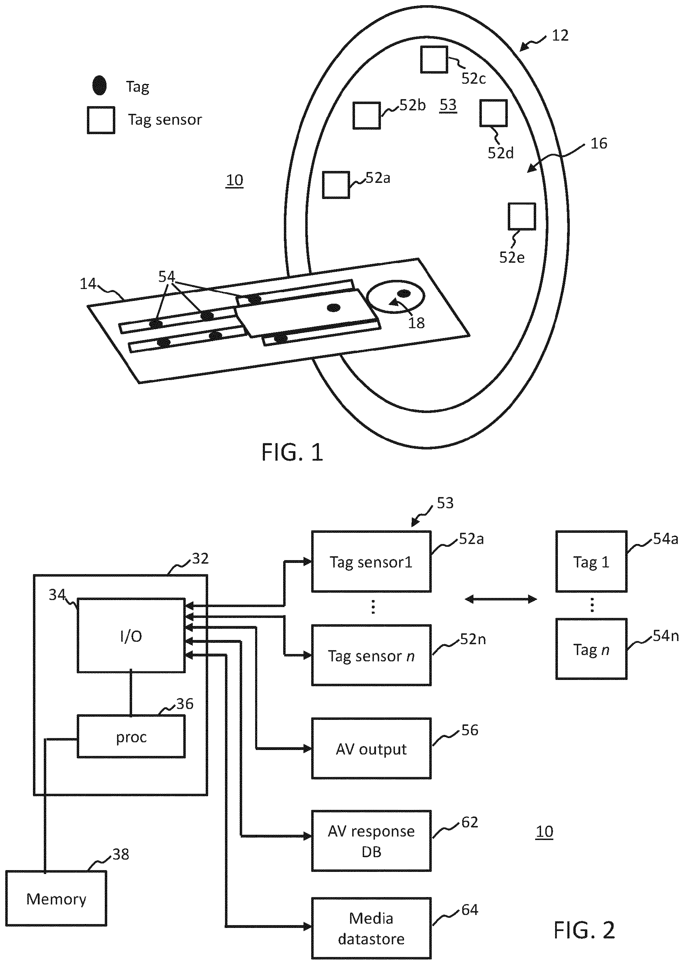

Fig. 1 outlines a schematic representation of an example interactive system 10 according to one or more embodiments. Fig. 2 outlines the system 10 in block diagram form.

The system 10 comprises a moveable article 18.

The system further comprises a housing structure 12. In the illustrated example, the housing is shaped to define a bore 16, although this is not essential. The housing is shown in schematic form, wherein just a front face of the housing is shown. In practice, the housing would typically be extended along the axial dimension of the bore.

The system may further include a platform 14 slidable in and out of the bore 16, wherein the moveable article 18 is positionable on the platform and receivable at least partially inside the bore 16 by movement of the platform into the bore.

The system 10 further comprises a plurality of wirelessly detectable tags 54, each encoded with a unique identifier. At least a subset of two or more of the plurality of wirelessly detectable tags are carried by the moveable article 18 at pre-defined locations of the article.

The system further comprises a tag sensor apparatus 53 comprised by the housing 12, operable to sense each of the plurality of wirelessly detectable tags 54 when within a detectable range, including reading the unique identifier of each sensed tag. The tag sensor apparatus may comprise one or more tag sensor devices 52. The illustrated example of Fig. 1 has five tag sensor devices 52a-52e, but more may be provided or just one may be provided. In the illustrated example, a plurality of tag sensor devices 52 are arranged at different positions around the bore of the housing structure.

The system further includes a user interface. The user interface may comprise a user output means such as a sensory output apparatus. For example, in the illustrated example, the user interface comprises an audio and/or visual (AV) output apparatus 56. By way of non-limiting example, the AV output apparatus may comprise any one or more of: a display screen, an acoustic output device such as a set of one or more speakers or headphones, and a set of one or more controllable light sources.

The system further comprises a controller 32, wherein the controller is adapted to: receive tag detection data from the tag sensor apparatus 53 and to control an AV output of the AV output apparatus 56 in dependence upon the received tag detection data.

The controller 32 may comprise one or more processors 36. The controller may comprise an input/output 34 or communication interface.

In the illustrated example of Fig. 2, the system further comprises a media datastore 64, wherein the media datastore stores a plurality of AV presentations for output by the AV output apparatus 56 of the user interface.

In the illustrated example of Fig. 2, the system further comprises an AV response database 62 which lists an indication of at least one of the AV presentations in the media datastore 64 to present to a user in response to each of a set of different possible tag detection datasets. For example, in some embodiments, the received tag detection data may be used to infer a pose and/or motion state of the article and the AV response database may list an indication of at least one of the AV presentations in the datastore to present to a user in response to each of a set of different possible pose and/or motion states of the article.

More generally, the system may comprise a media supply subsystem wherein the media supply sub-system is operable to output or provide an AV presentation for output by the user interface responsive to a request message, e.g. from the controller 32. The media supply subsystem may comprise the AV response database 62 and media datastore 64 mentioned above. Additionally or alternatively, the media supply subsystem may comprise other forms of media supply, such as for instance a generative AI module for partly or wholly generating an AV presentation for output responsive to a request message, for example responsive to a request message indicative of a particular tag detection dataset or indicative of a detected pose and/or motion state of the moveable article.

The system 30 may further comprise a memory 38 for storing computer program code (i.e. computer-executable code) which is configured for causing the one or more processors 36 of the controller to perform the functionality as outlined above, or in accordance with any embodiment described in this disclosure, or in accordance with any claim. Additionally or alternatively, the memory 38 may be for storing (e.g. temporarily) tag detection data obtained by the tag sensing apparatus 53.

As mentioned above, in some embodiments, the moveable article 18 is shaped to mimic the form of a human body, comprising a head, arms, legs and torso, e.g. a doll, or figurine.

In some embodiments, the controller 32 may be adapted to access the AV response database 62, for querying the AV response database with the obtained tag dataset or the detected pose and/or motion state to identify an AV presentation to display to a user. The controller 32 may further be configured to control the AV output device 56 of the user interface to output the identified AV presentation.

The system may comprise the media datastore 64 in some embodiments, or the datastore 64 may be remote to the system, e.g. a cloud datastore.

Both the AV response database 62 and media datastore 64 are optional features of the system and represent just one convenient method for implementing the response behavior of the system responsive to different interaction states of the article 18 relative to the housing 12.

In some embodiments, each of the wirelessly detectable tags 54 may be RFID tags and wherein the tag sensor apparatus 53 is an RFID tag sensor apparatus.

Alternatively a more sophisticated position sensing means could be used wherein an xyz co-ordinate position of each tag can be detected directly by the sensor apparatus. Use of RFID tags greatly simplifies the operation and structure of the device.

As mentioned above, in some embodiments, the controller 32 is adapted to determine an indication of a pose position and/or motion of the article relative to the housing structure based on the received tag detection data and based on the known pre-defined locations of the wirelessly detectable tags relative to the article, and control an AV output of the AV output apparatus 56 in dependence upon the detected pose and/or motion.

There are different mechanisms by which this could be achieved. In a simplest case, the system could comprise just a single tag sensor 52 and wherein a sequence order in which the plurality of readable tags comprised by the moveable article are detected is used to infer a pose of the article (if the positions of the tags relative to the article are known). The time intervals between sequential detections could provide an indication of speed and/or direction of motion. Greatest sensitivity in pose and/or motion detection may be obtained however if a plurality of tag detectors 52 is used (e.g. carried by the housing 12) in combination with a plurality of wirelessly detectable tags carried by the article.

Thus, in general, the detection mechanism according to some embodiments may be understood as follows.

The tag sensing apparatus 53 may comprise one or more tag sensor devices 52, wherein each tag sensor device 52 has a spatial sensing range within which any of the wirelessly detectable tags 54 is detectable by the tag sensor device 52, and outside of which a wirelessly detectable tag is not detectable by the tag sensor device. Responsive to entry of any wirelessly detectable tag into its respective spatial sensing range, each of the one or more tag sensor devices may be adapted to generate an output indicative of the unique identifier of the detected tag. The controller 32 may be adapted to receive the outputs of the one or more tag sensor devices and determine an indication of pose and/or motion of the article relative to the housing structure 12 based on identities of the tags which are detected at each of the one or more tag sensor devices and a sequence order in which the tags are detected.

This may for example comprise identifying which tags 54 are detected by which sensor device(s) 52, and which tags are not detected by which sensor devices. It may further comprise detecting the order in which the tags which are detected to come into the spatial range of each sensor device.

By detecting which tags are detected by each sensing device and which are not, an axial rotation of the article might be determinable, for example if different sensors have different angular ranges of sensitivity. This will be discussed further later.

By determining the sequencing of tag detection, a rotation position of the article 18 can for example be detected, for example a rotation position about an axis normal to the platform 14. For example, in the case of a doll, if the article is oriented feet-first, the tags 54 located near the feet of the doll would be detected first, followed by those on the body, followed by those on the head. If the doll were oriented head-first, the sequence order would be the opposite.

By preferably further keeping timestamps of each tag detection, a picture can also be built up of the speed of motion of the article.

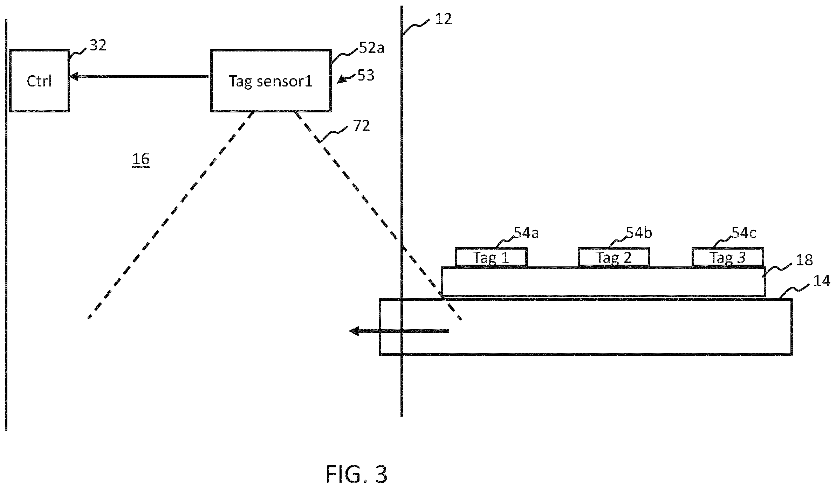

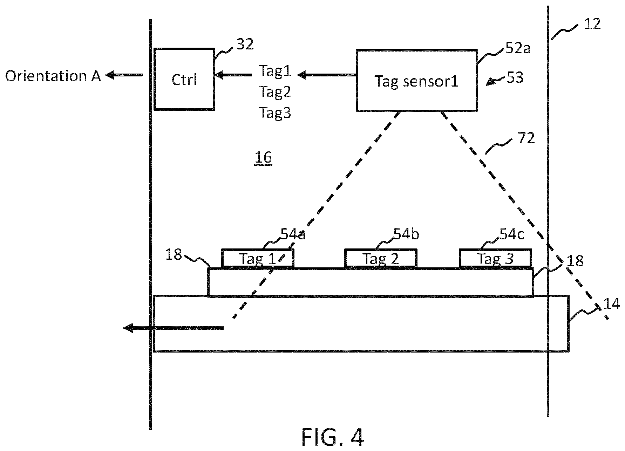

An example is illustrated schematically in Fig. 3 and Fig. 4.

Illustrated is a schematic cross-section view across an axial axis of bore 12 of the housing. Shown is the moveable platform 14 and the moveable article 18 laid atop the platform. In this illustrative example, three wirelessly detectable tags are shown 54a, 54b, 54c, which have known mounting positions on the article. In practice, the tags might be integrated inside the article 18 or mounted at a surface or any other desired configuration. The article is shown in block form but in practice may take the shape of a human-like figure. Schematically illustrated is also the controller 32, operatively coupled with the tag sensor apparatus 53 for receiving tag sensor data. Fig. 3 and Fig. 4 show only a single tag sensor 52a, although it will be appreciated that the system may include more than one. An example sensing range 72 of the tag sensor 52a is schematically shown in Fig. 3 and Fig. 4.

Fig. 3 shows the interactive system with the platform 14 in a position slid outside of the bore 16, with the article 18 therefore outside of the bore. It can be seen that each of the wirelessly detectable tags 54a, 54b, 54c are outside of the sensing range 72 of the tag sensor 52a. Fig. 4 shows a configuration after the user has pushed the platform and the article inside the bore. As the user pushes the article into the bore, it will be appreciated that each wireless tag 54 will sequentially come into the wirelessly detectable range of the tag sensor 52a. Fig. 4 schematically illustrates the sequential detection data which the tag sensor 52a may output to the controller 32. Each time a tag is detected, the tag ID and a timestamp may be communicated to the controller. The controller 32 may be adapted to compile a running record of tag identifiers which are detected by each of the one or more tag sensor devices 52a, a sequence order in which the identifiers are detected, and a timestamp at which each is detected.

If there is more than one tag sensor device 52 comprised by the tag sensor apparatus, then a respective running record is kept for each sensor device. For example, the tag sensor apparatus 53 may comprise a plurality of tag sensor devices 52, each independently operable to sense each of the plurality of wirelessly detectable tags 54, and wherein a record of detected tags and timestamps for each sensor is kept.

From the sequence order, at least a pose position, e.g. at least an orientation, of the article 18 may be detectable. For example at least an orientation about a vertical axis may be detectable (e.g. whether the article is inserted feed first or head first). From the sequence order and timestamps, the controller is adapted to detect a speed of movement of the article relative to the housing structure based on the tag detection data.

If a plurality of tag sensor devices 52 are arranged at different positions around the bore 16 of the housing structure 12, a more detailed indication of pose position may be detectable.

An example implementation of the method according to a particular set of embodiments will now be described by way of illustration of the above-summarized concept of the invention. It will be appreciated that not all features of this particular set of embodiments are essential to the inventive concept, and are described to aid understanding and to provide an example to illustrate the inventive concepts.

It is proposed in accordance with at least one set of embodiments to provide an array of RFID tags to a moveable article, e.g. in the form of a doll, and one or a plurality of RFID readers to the housing structure 12. Herein, for brevity, the article may be referred to as a doll, although it should be understood that the doll can instead take a different form of movable article.

As briefly discussed above, by adding detectable tags to the doll, e.g. to the body, head, and limbs of the doll, the XYZ coordination of the doll can be determined. For instance, if the patient is scheduled to have a scan of the legs done, the doll can be put into the scanner feet first to activate an animation on screen of a scan being made of the legs.

Thus, more generally, in accordance with some embodiments, the controller 32 may be configured to determine an indication of a pose position and/or motion of the article relative to the housing structure based on the received tag detection data and based on the known pre-defined locations of the wirelessly detectable tags relative to the article; and control an AV output of the AV output apparatus in dependence upon the detected pose and/or motion.

It is proposed in some embodiments that the system include one or more secondary articles, each also carrying one or more wirelessly detectable tags 54 and which a user can manipulate relative to the housing 12 and to the primary moveable article 18. It is proposed for example that secondary articles may be provided in the form of props which could be added to the doll and/or the scanner setup. These props could include for example pieces of clothing and/or accessories, such as t-shirts, trousers, glasses, watches, jewelry and so on. This can, for example, help to educate a user as to what accessories it is acceptable to wear during a scan and which should not be worn, and/or which clothes are comfortable and which clothes are best for countering possible temperature changes.

As a more general concept therefore, it is proposed that in some embodiments, the system further comprises one or more secondary articles, each secondary article being removably mountable to the moveable article 18 or removably mountable to the housing structure 12, each of the one or more secondary articles carrying a pre-defined one or more of the plurality of wirelessly detectable tags 54.

In some embodiments, the controller 32 may be adapted to control the AV output of the AV output apparatus 56 further based on which, if any, of the wirelessly detectable tags 54 carried by the one or more secondary articles are detected (e.g. which have been detected in a current usage session.)

In other words, the controller may modify the control of the AV output responsive to, and in dependence upon, presence of a secondary article within the sensing field of the sensing apparatus 53.

By way of example, the secondary articles may be shaped to represent items of apparel or accessories, and wherein the AV output is controlled to present a warning to the user responsive to detection of disallowed clothing. For example, each secondary article is shaped and structured to mimic the form of a garment or personal accessory, e.g. clothing, eye-wear, headwear.

For instance, the patient might put in the doll with a watch still on its arm. The tag sensor apparatus reads that the watch is still being worn, which in turn activates a warning which states that a watch contains metal, and metal is prohibited inside a scanner.

To this end, the AV response database 62 may for example further record an indication of a respective at least one of the AV presentations in the datastore to display responsive to detection of any of the wirelessly detectable tags carried each respective one of the one or more secondary articles. Responsive to detecting any of the wirelessly detectable tags carried by any of the one or more secondary articles, the controller 32 may be adapted to query the AV response database with the identifier of the detected tag to identify an AV presentation to output to a user in response, and control the user interface to output the identified AV presentation.

In some embodiments, the system may keep a running record or log of AV presentations which have been output by the system since a start of an operation session. This may allow the controller to keep track of information which the user has already been presented. This additional information in the running log may additionally be used in the controlling the AV output of the AV output apparatus in dependence upon the received tag detection data. For example, AV presentations which have already been output to the user interface may not be output again in a same operation session.

In some embodiments, the system may be configured or initialized according to a type of scan which is planned for the patient user.

To this end, the controller 32 may be adapted to obtain an indicator of a category of planned diagnostic study for the user, and the controller 32 may be adapted to control the AV output of the AV output apparatus 56 further in dependence upon the category of planned diagnostic study.

For example, there may be stored a different respective AV response database 62 for each of a plurality of different categories of diagnostic study. The controller 32 may be adapted to identify the AV response database associated with the planned diagnostic study for the user and use the identified AV response database for the lookup of AV responses. Thus, the AV responses may vary in dependence upon the category of the planned diagnostic study.

For example, the controller 32 may be communicable with a patient database which records information indicative of a category of planned diagnostic study for the user, and wherein the controller 32 is adapted to obtain the indicator of a category of planned diagnostic study for the user by querying of the patient database.

Additionally or alternatively, in some embodiments, this could be achieved by adding additional functionality permitting acquisition of the scan type information either by scanning a patient card or by manual input via a user input mechanism. In some examples, the patient might be provided a card or token which carries a wirelessly readable tag, wherein the controller determines the type of scan based on reading the tag carried by the card or token. The card or token could be scanned using the same tag sensor apparatus 52 as is used to detect the tags of moveable article, e.g. by holding the card inside or near the bore opening. Alternatively, a separate tag sensor might be provided, e.g. mounted to an exterior of the housing.

In other words, as a more general concept, the controller 32 may be adapted to obtain the indicator of a category of planned diagnostic study by means of detection of one of a pre-determined set of wirelessly detectable tags 54, and wherein the controller is adapted to associate each of the pre-determined set of wirelessly detectable tags with a different one of the plurality of categories of diagnostic study.

A tag associated with the relevant study may be brought into the sensitive field of the sensing apparatus 73, to communicate the relevant study to the controller. For example, a user might carry a card which comprises a tag having the appropriate identifier encoded thereon. Alternatively, tags attached to different of the secondary articles may be associated with different categories of diagnostic study.

Depending upon the scan type which is detected via the tag, this will activate a certain pathway, which the patient will have to go through in terms of the information which the patient is presented.

For instance, an example may be considered of a patient who needs to have a scan of the head. First, a card carrying a tag indicative of a head scan will be given to the patient. The patient scans the card using a tag sensor of the system. A user interface may be controlled to provide a user output acknowledging the start of a head scan. The patient may then prepare the doll in the right way, by first checking for accessories that are prohibited inside the scanner, or putting on the most appropriate comfortable clothes, or putting on the clothes that take into account the temperature variations during a scan.

The user may then insert the doll head-first inside the scanner. If the doll is inserted the wrong way in the scanner (e.g. on its belly, or legs first), the controller may detect this and an AV output presented communicating a message that the doll is positioned in the wrong way.

As discussed above, in a preferred set of embodiments, the system may generate outputs responsive to different pose positions, e.g. orientations, of the moveable article 18 (e.g. doll) relative to the housing structure 12. The means for detecting different pose positions will now be discussed in more detail.

Each tag carried by the article 18 may be understood as having an orientation relative to the article 18. For example, each tag may comprise circuitry which extends across a planar substrate, and wherein the orientation of the tag is defined by an orientation of the planar substrate, for example a direction of a normal axis of the planar substrate. For example, each tag may comprise a coil, e.g. an antenna coil, and wherein an orientation of an axial axis of the coil defines an orientation of the tag.

It will be recognized that sensitivity of the tag sensing apparatus 53 to a given tag may vary in dependence upon its orientation relative to the tag sensing apparatus.

For example, the tag sensing apparatus 53 may comprise one or more tag sensor devices 52, and wherein each of the wirelessly detectable tags 54 is detectable to any given one of the one or more tag sensing devices only when oriented within a defined limited range of orientations relative to the given tag sensing device. In this context, the set of wirelessly detectable tags 54 carried by the article 18 may include tags mounted at different respective orientations relative to the article.

For example, in some embodiments, tags 54 could be placed at an angle to one another, e.g. perpendicular to each other. Which tag is detected by a tag reader placed at a fixed position will depend upon the orientation of the moveable article relative to the tag reader. For instance, if only one of the two tags is detected, it could be determined that the moveable article 18 is on its side.

In other words, each of the one or more tag sensor devices 52 may have an angular sensing range, and wherein only tags 54 oriented within the angular sensing range are detectable by the tag sensing device 52. By determining which tags are detected by which of the one or more sensor devices, information relating to orientation of the article can be inferred.

In some embodiments, the tag sensing apparatus 53 may comprise a plurality of the tag sensing devices 52, these being arranged relative to the housing 12 such that the angular sensing ranges of different of the sensing devices vary. This way, more information about orientation can be inferred.

Thus, to state this more explicitly, in some embodiments, the controller 32 may be adapted to determine an indication of a pose position of the article 18 relative to the housing structure 12 based on the received tag detection data and based on the known pre-defined locations of the wirelessly detectable tags 54 relative to the article 18, and wherein the determining the indication of the pose position of the article comprises compiling a record of which of the at least subset of wirelessly detectable tags carried by the article are detected by each of the one or more tag sensor devices. Based on knowledge of the orientation of each of the tags 54 relative to the article 18, and of the range of tag orientations to which each tag sensor device 52 is sensitive, an indication of a rotation position of the article relative to the one or more tag sensor devices can be inferred.

The knowledge of the orientation of each of the tags 54 relative to the article 18, and of the range of tag orientations to which each tag sensor device 52 is sensitive could be encoded implicitly for example within a pre-defined lookup table, or mapping function or transfer function which permits mapping from a particular combination of tag detections, and optionally in a particular order, to an inferred pose of the moveable article 18.

There will now be outlined in more detail an explanation of how to achieve the aforementioned inference of orientation or rotation position using the mentioned information.

One simple way to implement this is to incorporate a calibration phase into setup of the system, wherein the calibration phase permits compiling the lookup table or transfer function. For example, during an initial calibration phase, the article 18 may be placed in various known orientations relative to the housing structure 12. Each orientation of the article results in a specific set of tag detection data. This data is stored along with the known orientation in the pre-defined lookup table, mapping function, or transfer function.

When the system is operational, the tag sensor devices 52 may continuously scan and detect the wirelessly detectable tags 54 on the article 18. The order and combination of tag detections provide a real time indicator of the article's current orientation and position relative to the housing structure. Once the tag detection data is received by the controller 32, it cross-references this data with the pre-defined lookup table, mapping function, or transfer function. The aim is to match the real-time data with the closest stored calibrated data. Given the identified match between real-time and calibrated data, the controller can estimate the pose position of the article 18. It will be recognized that this approach is not limited to position detection but may also be applied to orientation detection. The knowledge about each tag's orientation relative to the article 18 and the range of tag orientations to which each sensor device is sensitive, enables article orientation to be inferred.

Sensitivity to pose detection may be increased if at least two of the wirelessly detectable tags 54 carried by the article 18 are oriented perpendicular to one another.

For example, as mentioned above, each tag 54 may comprise circuitry which extends across a planar substrate, and wherein the orientation of the tag is defined by an orientation of the planar substrate. For example, the circuitry may comprise a sensing coil or antenna which extends across the plane. This improves the chance that the set of detection data acquired at the tag sensor will differ depending upon orientation of the article carrying the tags.

Additionally or alternatively, the tags 54 of the article 18 may be arranged in regular or other pre-determined geometric patterns, whereby a sequence order in which tags are detected by the tag sensor apparatus 53 is indicative of pose position and/or motion direction.

For example, a pre-defined set of at least three of the wirelessly detectable tags 54 carried by the article may be aligned in a row along a linear axis having a defined extension direction relative to the article. They may be arranged at substantially the same orientation relative to the article in some cases. For example, if each tag has a circuit mounted to a planar substrate, the normal axes of the planar substrates of all three tags may be substantially aligned. The determining the indication of pose position of the article may be based at least in part on detecting a sequence order in which the tags are detected by the tag sensing apparatus, and based on knowledge of the defined extension direction of the linear axis.

Thus, here, a number of tags 54 are aligned in a straight line. By detecting a timing between the detection of the tags, an indication of an orientation of the article 18 carrying the tags can be inferred. Additionally or alternatively, a speed and/or direction of motion of the article relative to the housing structure, e.g. speed at which the doll is pushed into the dummy scanner via the sliding table, could be detected and the AV output adapted dependent thereon. The spacing between neighboring tags along the row may be uniform.

More generally, the controller may be adapted to detect the timing between the detection of the tags. This may allow for detecting the speed of receipt of the article within the bore (e.g. speed of pushing the doll into the bore by sliding of the table), if the spacing between the aligned tags is known.

For example, the speed of movement of the moveable article can be compared with pre-defined thresholds in order to determine whether a message related to this velocity, e.g. about e.g. carefulness, must be generated.

In some embodiments, the AV outputs presented to the user may be varied in dependence upon an identity of the user. In other words, the AV experience may be personalized to different users.

To this end, functionality may be provided permitting the scanner to identify a user of the system. This could be achieved in different ways. One method would be to receive user or patient ID information as a user input from a user interface of the device. Either the user themselves or a parent or clinician may input the information. Another method may be to associate a particular moveable article with a particular user, i.e. the user is assigned a unique one of a set of available articles (e.g. dolls), and wherein an identity of the patient can be inferred based on detecting the tags of the unique article being brought within the sensing range of the tag sensor apparatus 53. Another method may be to provide a user with a card or token carrying a wirelessly readable tag uniquely linked to the user via a patient or user database. For example, this could be a hospital card identification linked to an electronic medical record (EMR), e.g., scan type, first time scanning, age and so on.

If functionality is provided to enable identification of the user, personalized interaction between the system and the user can be facilitated, for example specific learning goals, and customized AV outputs, e.g. using the user's name and/or using the user's preferred colors.

Thus, in more general terms, in some embodiments, the controller 32 may be adapted to obtain an indicator of a user identity and to control the AV output of the AV output apparatus further in dependence upon the category of planned diagnostic study. For instance, a different respective AV response database 62 may be compiled for each user, permitting personalized interaction between the system and each individual user. The AV response for the user might be configured by a technician or assistant in advance.

Additionally, it is proposed in some embodiments to use the tag detection data acquired during the user's interaction with the system to modify various characteristics of the scan workflow itself, e.g. adapt an ambient environment or experience in the scan room, provide extra guidance, or provide additional intervention during the scan. Mapping between scan data and scan workflow modifications could be achieved using a lookup table or for example using a trained machine learning algorithm.

Thus, the proposed interactive system may become part of a larger hospital ecosystem that also includes the system, a software application associated with the system (e.g. with learning goals), the medical scanning equipment, the ambient environment in the scan room and EMR.

Referring further to user personalization, different possible modifications to the AV output responses of the system and/or the scan room ambient experience may be considered.

For example, in one embodiment, the ambient experience of the scan room may be modified in dependence upon a scan type being conducted, e.g. in dependence upon a body part being scanned. For example, for a head scan, different messaging and Ambient Experience can be generated than for a knee scan.

The ambient experience of the scan room refers to properties such as lighting intensity, color and/or directionality; room soundscape, e.g. background music, nature sounds, or white noise (e.g. for a head scan, gentle instrumental music or the sounds of waves might be considered, while for a knee scan, a gentle forest breeze or bird chirping might be more chosen); visual displays such as projected images or video displays on walls or the ceiling; room temperature.

In another embodiment, the dolls can be made according to different body shapes to facilitate different personalized experiences. The dolls can also be made from soft material that can facilitate bending, so to personalize the experience. (Patient can be asked to straighten the leg of the doll, which might be required for the scan).

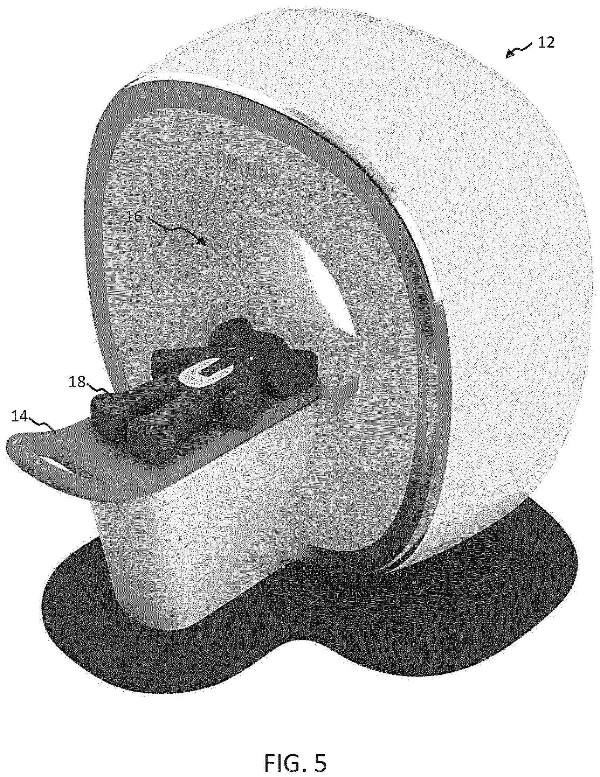

Fig. 5 illustrates an example system according to one or more embodiments of the invention. This illustrates an example implementation in which the housing structure 12 is shaped to define a bore 16, and wherein the housing structure is shaped to take the appearance of a (miniature) medical imaging scanner, for example a CT scanner or MRI scanner. The example system of Fig. 5 further comprises an example moveable article 18 which takes the form of a doll or figurine. In particular, the moveable article is shaped to take the appearance of an anthropomorphic figure having arms, legs a head and a body. The system includes a moveable platform 14. This is slidable relative to the bore 16 to permit sliding of the platform axially into the bore to a greater or lesser extent. The moveable platform takes a shape to mimic a patient table of an imaging scanner. As illustrated in Fig. 5, the moveable article 18 is positionable on the moveable platform 14 to mimic a patient lying on a table of a medical imaging scanner.

Embodiments of the invention described above employ a controller. The controller may comprise one or more processors. The one or more processors may be located in a single containing device, structure or unit, or it may be distributed between a plurality of different devices, structures or units. Reference therefore to the controller being adapted or configured to perform a particular step or task may correspond to that step or task being performed by any one or more of a plurality of processing components, either alone or in combination. The skilled person will understand how such a distributed processing device can be implemented. The controller may include a communication module or input/output for receiving data and outputting data to further components.

The one or more processors of the controller can be implemented in numerous ways, with software and/or hardware, to perform the various functions required. A processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. An interactive system (10), comprising:
a moveable article (18);
a housing structure (12) shaped to define a bore (16);
a platform (14) slidable in and out of the bore, wherein the moveable article is positionable on the platform and receivable at least partially inside the bore by movement of the platform into the bore;
a plurality of wirelessly detectable tags (54), each encoded with a unique identifier,
wherein at least a subset of two or more of the plurality of wirelessly detectable tags are carried by the moveable article at pre-defined locations of the article;
a tag sensor apparatus (53) comprised by the housing structure, operable to sense each of the plurality of wirelessly detectable tags (54) when within a detectable range, including reading the unique identifier of each sensed tag;
a user interface comprising an audio and/or visual (AV) output apparatus (56); and
a controller (32), wherein the controller is adapted to:
receive tag detection data from the tag sensor apparatus (53); and
control an AV output of the AV output apparatus (56) in dependence upon the received tag detection data.

2. The system of claim 1, wherein the controller is adapted to:
determine an indication of a pose position and/or motion of the article relative to the housing structure based on the received tag detection data and based on the known pre-defined locations of the wirelessly detectable tags relative to the article; and
control an AV output of the AV output apparatus in dependence upon the detected pose and/or motion.

3. The system of claim 2,
wherein the controller is communicable with a media supply sub-system, wherein the media supply sub-system is operable to output an AV presentation for output by the user interface responsive to a request message.

4. The system of claim 3,
wherein the media supply sub-system comprises
a media datastore, wherein the media datastore stores a plurality of AV presentations for output by the user interface, and
an AV response database which lists an indication of at least one of the AV presentations in the datastore to present to a user in response to each of a set of different possible pose and/or motion states of the article; and
wherein the controlling the AV output in dependence upon the detected pose and/or motion comprises:
accessing the AV response database;
querying the AV response database with the detected pose and/or motion state to identify an AV presentation to display to a user; and
controlling the user interface to output the identified AV presentation.

5. The system of any of claims 1-4, wherein each of the wirelessly detectable tags are RFID tags and wherein the tag sensor apparatus is an RFID tag sensor apparatus.

6. The system of claim 5,
wherein the tag sensor apparatus comprises one or more tag sensor devices; wherein each tag sensor device has a spatial sensing range within which a wirelessly detectable tag is detectable by the tag sensor device, and outside of which a wirelessly detectable tag is not detectable by the tag sensor device;
wherein, responsive to entry of any wirelessly detectable tag into its respective spatial sensing range, each of the one or more tag sensor devices is adapted to generate an output indicative of the unique identifier of the detected tag; and
wherein the controller is adapted to receive the outputs of the one or more tag sensor devices and determine an indication of pose and/or motion of the article relative to the housing structure based on identities of the tags which are detected at each of the one or more tag sensor devices and a sequence order in which the tags are detected.

7. The system of claim 6,
wherein the controller is adapted to compile a running record of tag identifiers which are detected by each of the one or more tag sensor devices, a sequence order in which the identifiers are detected, and a timestamp at which each is detected.

8. The system of any preceding claim, wherein the controller is adapted to detect a speed of movement of the article relative to the housing structure based on the tag detection data.

9. The system of any preceding claim, further comprising one or more secondary articles, each secondary article being removably mountable to the moveable article,
each of the one or more secondary articles carrying a pre-defined one or more of the plurality of wirelessly detectable tags.

10. The system of claim 9, wherein the controller is adapted to control the AV output of the AV output apparatus further based on which, if any, of the wirelessly detectable tags carried by the one or more secondary articles are detected.

11. The system of any preceding claim,
wherein the controller is adapted to obtain an indicator of a category of planned diagnostic study for the user; and
wherein the controller is adapted to control the AV output of the AV output apparatus further in dependence upon the category of planned diagnostic study, and
optionally wherein the controller is adapted to obtain the indicator of a category of planned diagnostic study by means of detection of one of a pre-determined set of wirelessly detectable tags, wherein the controller is adapted to associate each of the pre-determined set of wirelessly detectable tags with a different one of the plurality of categories of diagnostic study.

12. The system of any preceding claim,
wherein each tag carried by the article has an orientation relative to the article;
wherein the tag sensing apparatus comprises one or more tag sensor devices;
wherein each of the wirelessly detectable tags is detectable to any given one of the one or more tag sensing devices only when oriented within a defined limited range of orientations relative to the given tag sensing device;
wherein the set of wirelessly detectable tags carried by the article include tags mounted at different respective orientations relative to the article.

13. The system of claim 12,
wherein the controller is adapted to determine an indication of a pose position of the article relative to the housing structure based on the received tag detection data and based on the known pre-defined locations of the wirelessly detectable tags relative to the article; and
wherein the determining the indication of the pose position of the article comprises:
compiling a record of which of the at least subset of wirelessly detectable tags carried by the article are detected by each of the one or more tag sensor devices, and
based on knowledge of the orientation of each of the tags relative to the article, and of the range of tag orientations to which each tag sensor device is sensitive, inferring an indication of a rotation position of the article relative to the one or more tag sensor devices.

14. The system of claim 12 or 13, wherein at least two of the wirelessly detectable tags carried by the article are oriented perpendicular to one another.

15. The system of any preceding claim,
wherein the controller is adapted to determine an indication of a pose position of the article relative to the housing structure based on the received tag detection data and based on the known pre-defined locations of the wirelessly detectable tags relative to the article;
wherein a pre-defined set of at least three of the wirelessly detectable tags carried by the article are arranged at substantially the same orientation relative to the article, and are aligned in a row along a linear axis having a defined extension direction relative to the article; and
wherein the determining the indication of pose position of the article is further based on detecting a sequence order in which the tags are detected by the tag sensing apparatus, and based on knowledge of the defined extension direction of the linear axis.
